(19) Europäisches Patentamt
European Patent Office
Office européen des brevets

(11) Publication number: **0 313 658 B1**

(12) # EUROPEAN PATENT SPECIFICATION

(45) Date of publication of patent specification: **10.03.93**

(51) Int. Cl.⁵: **B01D 53/26**, B01D 53/32, G01N 27/42, G02F 1/17

(21) Application number: **87905276.9**

(22) Date of filing: **06.08.87**

(86) International application number: **PCT/JP87/00589**

(87) International publication number: **WO 88/08742 (17.11.88 88/25)**

(54) **MOISTURE REMOVER.**

(30) Priority: **08.05.87 JP 110617/87**
**19.05.87 JP 120114/87**
**19.05.87 JP 120115/87**
**25.05.87 JP 125932/87**

(43) Date of publication of application: **03.05.89 Bulletin 89/18**

(45) Publication of the grant of the patent: **10.03.93 Bulletin 93/10**

(84) Designated Contracting States: **DE FR GB**

(56) References cited:
**EP-A- 0 295 054**
**JP-A- 5 648 220**
**JP-A- 6 036 947**
**JP-A- 6 118 855**
**JP-A-59 212 651**
**JP-A-60 114 325**
**JP-A-61 181 520**
**JP-A-61 216 714**
**JP-B- 439 646**
**JP-B- 5 246 098**

(73) Proprietor: **MITSUBISHI DENKI KABUSHIKI KAISHA**
**2-3, Marunouchi 2-chome Chiyoda-ku**
**Tokyo 100(JP)**

(72) Inventor: **YAMAUCHI, S Mitsubishi Denki K K Itami-Seisakusho**
**1-1, Tsukaguchihonmachi 8-chome**
**Amagasaki-shi Hyogo 661(JP)**
Inventor: **MORI, K Mitsubishi Denki K K Itami-Seisakusho**
**1-1, Tsukaguchihonmachi 8-chome**
**Amagasaki-shi Hyogo 661(JP)**
Inventor: **NAGAO, E Mitsubishi Denki K K Itami-Seisakusho**
**1-1, Tsukaguchihonmachi 8-chome**
**Amagasaki-shi Hyogo 661(JP)**
Inventor: **HIROOKA, K Mitsubishi Denki K K Itami Seisakusho**
**1-1, Tsukaguchihonmachi 8-chome**
**Amagasaki-shi Hyogo 661(JP)**

(74) Representative: **Lawson, David Glynne et al**
**MARKS & CLERK 57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 313 658 B1

## Description

TECHNICAL FIELD

The present invention relates to a dehumidifier which removes moisture from a moisture containing gas.

BACKGROUND ART

Moisture adsorbents such as silica gel and molecular sieves are generally used for removing moisture from gases. Silica gel is a gel of silicic acid having strong adsorptivity and composed of $SiO_2 \cdot nH_2O$. Silica gel is porous and in some cases has a surface area as large as 450 $m^2$ per gram. The adsorptivity of silica gel depends upon the amount of water contained therein, and the more dehydrated it becomes, the greater its adsorptivity, so long as the gel structure is maintained. Fig. 7 is a graph showing the amounts of the water adsorbed by adsorbents in which the axis of ordinate represents adsorption and the axis of abscissa humidity. The adsorptivity of silica gel acts within a wider range than that with activated carbon and is superior to activated carbon with respect to such characteristics as incombustibilty and mechanical fastness.

Conventional moisture adsorbents have problems in that the corrosion of various types of adsorbents easily progresses in environments of high temperature and high humidity, and adsorbents such as silica gel have limited moisture adsorptivity and thus cannot remove moisture from a gas once they have reached the saturated adsorption state. In addition, fixed magnetic disk units which are conventionally installed in air-conditioned rooms exclusively used for such purposes have recently begun to be installed in more general environments, resulting the in need to remove with high reliability the moisture contained in these units.

Moisture removal devices incorporating solid-state components are also known. For example JP-A-60-114325 discloses a dehumidifier for removing moisture from a gas comprising a first electrode which is in contact with said gas containing moisture on one surface thereof and, when a positive voltage is applied thereto, produces protons from said moisture, a proton conductive solid which is connected to the other surface of said first electrode and through which said protons pass, and a second electrode which is in contact with said proton conductive solid on one surface thereof in a portion other than the connection portion between said proton conductive solid and said first electrode, and which is in contact with a space on the other surface thereof and, when a negative voltage is applied thereto, produces hydrogen or water from said protons which have passed through said proton conductive solid.

This document discloses the use of electrodes made of PTFE incorporating platinum black or iridium oxide.

Known solid-state devices of this kind are usable only for dehumidification.

An object of the present invention is to provide an improved dehumidifier capable of removing moisture from a gas.

A further object of the invention is to provide a humidity control device capable of controlling the moisture level in a space.

According to the present invention, there is provided a dehumidifier for removing moisture from a gas comprising a first electrode which is in contact with said gas containing moisture on one surface thereof and, when a positive voltage is applied thereto, produces protons from said moisture, a proton conductive solid which is connected to the other surface of said first electrode and through which said protons pass, and a second electrode which is in contact with said proton conductive solid on one surface thereof in a portion other than the connection portion between said proton conductive solid and said first electrode, and which is in contact with a space on the other surface thereof and, when a negative voltage is applied thereto, produces hydrogen or water from said protons which have passed through said proton conductive solid, said dehumidifier being characterized in that said proton conductive solid is a proton conductive solid electrolyte and each of said first electrode and said second electrode is a proton electron-mixed conductive solid.

In preferred embodiments, the device is operable reversibly so as to remove moisture from or add it to a space in which the humidity is to be controlled.

In the dehumidifier of the present invention, when a given voltage is applied between the first positive electrode and the second negative electrode, electrolysis takes place at the first electrode to decompose water into oxygen and protons (hydrogen ions). The protons produced by the electrolysis pass through the proton conductive solid and reach to the second electrode where the hydrogen ions are changed to water or hydrogen molecules, whereby the moisture contained in the first electrode is removed.

BRIEF DESCRIPTION OF DRAWINGS

Fig. 1 is an explanatory view of an embodiment of the dehumidifier of the present invention;
Fig. 2 is an explanatory view of another embodiment of the present invention;
Fig. 3(a) is a plan view of an arrangement in which the dehumidifier of the present invention is installed in a magnetic disk unit, and Fig. 3(b) is a sectional side view of the same;
Fig. 4(a) is a plan view of an arrangement in which the dehumidifier of the present invention is installed in a magnetic head, and Figs. 4(b) and 4(c) are a front view and an enlarged view of a slider portion of the same, respectively;
Fig. 5 is a drawing of another arrangement in which the dehumidifier of the present invention is installed in a magnetic head;
Fig. 6 is a drawing of a further arrangement in which the dehumidifier of the present invention is installed in a magnetic head;
Fig. 7 is a graph showing the adsorption of moisture by adsorbents;
Fig. 8 is a sectional side view of an embodiment of the present invention;
Fig. 9 is an explanatory view of the embodiment of the present invention;
Fig. 10 is an explanatory view of another embodiment of the present invention;
Fig. 11 is a graph showing the relationship between the current density and the terminal voltage of a humidity controller of the present invention;
Fig. 12 is a graph showing the change with time of the terminal voltage of the humidity controller of the present invention;
Fig. 13 is an explanatory view of a further embodiment of the present invention;
Fig. 14 is a schematic diagram in which the humidity controller of the present invention is applied to a magnetic disk unit;
Fig. 15 is a graph showing the state of dehumidification of the humidity controller provided in the magnetic disk unit shown in Fig. 14;
Fig. 16 is a block diagram of a principal portion of an embodiment of the humidity controller of the present invention;
Fig. 17 is an explanatory view of a still further embodiment of the present invention; and
Fig. 18 is a graph showing the states of humidification and dehumidification of the humidity controller when installed in a magnetic disk unit .

BEST MODE FOR CARRYING OUT THE INVENTION

Embodiments of the present invention are described below with reference to the drawings. Fig. 1 is an explanatory view of an embodiment of the humidifier of the present invention. In the drawing, reference numeral (1) denotes a vessel; reference numeral (2), a gas which is present in the vessel (1) and which contains moisture; reference numeral (3), water molecules which represents the moisture contained in the gas; reference numeral (4), a porous electrode in contact with the gas (2); and reference numeral (5), a proton conductive solid which is connected to the porous electrode (4) and made of $H_3MO_{12}PO_{40}\cdot 29H_2O$ or $H_3W_{12}PO_{40}\cdot 29H_2O$ having high conductivity. Reference numeral (6) denotes a porous electrode which is connected to the proton conductive solid (5) and is in contact with the space outside the vessel (1), the porous electrode (4), the proton conductive solid (5) and the porous electrode (6) being integrally formed as a laminate by a method of contact bonding or vapor deposition to constitute an electrochemical cell (7). Reference numeral 8 denotes an insulator which insulates the cell (7) from the vessel (1) and which is fixed to the vessel (1). Reference numeral (9) denotes a direct current power source which applies a voltage between the positive porous electrode (4) and the negative porous electrode (6).

A description will now be made of the operation. The moisture (3) contained in the gas (2) in the vessel (1) is subjected to the reaction shown below at the boundary between the proton conductive solid (5) and the porous electrode (4) which is positively charged by the voltage applied from the direct current power source (9).

$$H_2O \rightarrow 2H^+ + 1/2\ O_2 + 2e^-$$

The moisture (3) contained in the gas (2) is decomposed in accordance with this reaction to allow oxygen molecules (10) to remain in the vessel (1). The hydrogen ions (11) (referred to as protons hereinafter) produced by the decomposition of the moisture move through the proton conductive solid (5) in the direction shown by the arrow A toward the porous electrode (6) which is negatively charged. The

protons (11) that reach the porous electrode (6) are subjected to the reaction described below at the boundary between the porous electrode (6) and the proton conductive solid (5).

$$2H^{+} + 1/2\ O_2 + 2e^{-} \rightarrow H_2O$$

or

$$2H^{+} + 2e^{-} \rightarrow H_2$$

This reaction produces from the protons water or hydrogen molecules which are released to the space adjacent to the porous electrode (6). As a result, the moisture contained in the gas (2) in the vessel (1) is removed.

In this embodiment, the porous electrode 4, the proton conductive solid (5), and the porous electrode (6) are integerally formed as a laminate in that order, but these members can be porvided in any configuration to remove the moisture (3) contained in the gas (2) in the vessel (1) so long as the proton conductive solid (5) is brought into contact with the porous electrodes (4), (6) and a given voltage is applied thereto. In addition, a proton conductive solid composed of substances other than such compositions as the $H_3MO_{12}PO_{40}\cdot 29H_2O$ or $H_3W_{12}PO_{40}\cdot 29H_2O$ described in the embodiment can display similar effects to that produced in the embodiment.

In addition, as shown in Fig. 2, the heater (12) contained in the cell (7) can increase degree of the conductivity and produce a more remarkable effect.

Fig. 3 shows a case in which a dehumidifier (13) to which the present invention relates is installed in a magnetic disk unit (14), Fig. 3(a) being a plan view and Fig. 3(b) being a sectional side view. In the drawings, reference numeral (15) denotes a casing of the magnetic disk unti (14); reference numeral (16), a magnetic disk which is received in the casing (15) and in which information is recorded; reference numeral (17), a magnetic head which inputs and outputs the information in the magnetic disk (16); reference numeral (18), a rotary portion which holds the magnetic head (17) and positions it at a given position in the magnetic disk (16); and reference numeral (19), a breathing portion which is opened at a given position in the casing (15) of the magnetic disk (16). The dehumidifier (13) is installed so that the breathing portion (19) is closed by the porous electrode (6) from the inside of the casing (15) and the porous electrode (6) is brought into contact with the air outside the casing (15). When a given voltage is applied between the positive porous electorode (6) and the negative porous electrode (4) of the dehumidifier (13), the moisture contained in the casing (15) of the magnetic disk (14) is removed.

Fig. 4 shows the state wherein the dehumidifier (13) is installed in a slider portion (23) constituting a magnetic head (22) of the magnetic disk unit 14, Fig. 4(a) being a plan view, Fig. 4(b) being a front view, and Fig. 4(c) being an enlarged view of the slider portion. Reference numeral (16a) denotes a recording surface of the magnetic disk (16); reference numeral (22), a record/regeneration portion; reference numeral (23), the slider portion; and reference numeral (23a), floating surfaces. The dehumidifier (13) is buried in the slider portion (23) so that the surface of the porous electrode (4) is brought substantially into contact with the floating surface (23a). The dehumidifier (13) provided in the magnetic head configured as described above removes the moisture present between the floating surface (23a) and the recording surface (16a) of the magnetic disk (16) and discharges the moisture to the outside from an air hole (26) through a space (25). It is thus possible to prevent the adsorption phenomenon between the magnetic disk (16) and the floating surface (23a) which would be caused by moisture.

A description will now be made of another embodiment of the present invention with reference to Fig. 5. In this embodiment, the whole of the magnetic head (22) is formed as a dehumidifier in which the entire floating surfaces (23a) serve as the porous electrode (4), the entire surface of the magnetic head (22) opposite to the floating surfaces (23a) serves as the porous electrode (6), and the whole of the magnetic head between the two porous electrodes (4), (6) serves as the proton conductive solid (5). When a voltage is applied between the positive porous electrode (4) and the negative porous electrode (6) of the magnetic head (22) configured as described above, the dehumidifier (13) is actuated so that the moisture present between the recording surface (16a) of the magnetic disk (16) and the floating surface (23a) can be removed.

A description will now be made of a further embodiment of the present invention with reference to Fig. 6. In this embodiment, the dehumidifiers (13) are provided in the slider portions (23), as well as being provided in a concave portion (27) of the magnetic head (22) so that the moisture between the recording surface (16a) of the magnetic disk and the floating surfaces (23a) is removed from the vicinity of the floating surfaces to the outside of the magnetic disk. Such a configuration allows the ability to remove the moisture

between the floating surfaces (23a) and the recording surface (16a) to increase. Electrodes made of proton electron-mixed conductive solids are used as the electrodes (4), (6). In this case, each of the proton electron-mixed conductive solids used is a metal or metallic compound such as Pd, $LaNi_5$ or $Ti_3Ni$ which can form a metal hydride or a metal oxide such as $WO_3$, $ReO_3$, $MoO_3$, $MnO_2$ or $NiOOH.H_20$. The operation of the dehumidifier using such proton electron-mixed conductive solids as electrodes is described below. The above-described electrolytic reaction first takes place on the contact surface between an electrode (referred to as first electrode hereinafter) which is positively charged and composed of a proton electron-mixed conductive solid and a gas containing moisture. This electrolytic reaction produces protons which pass through the first electrode, then the proton conductive solid and an electrode (referred to as second electrode) which is negatively charged and composed of a proton electron-mixed conductive solid, and finally reaches the contact surface between the second electrode and a space. The protons combine with the electrons in the second electrode to form hydrogen molecules or react with the oxygen in the space to form water, the hydrogen molecules or oxygen then being released to the space.

The direct current power source in each of the embodiments can be replaced by an optical generating element. The decomposition of water takes place in one of the electrodes, and a reaction takes place in the other electrode to produce water so that humidity can be controlled, as well as allowing the electrical energy obtained by the optical generating element to be used as the power source. Therefore, this embodiment can have the semipermanent function of controlling humidity.

Fig. 8 shows a still further embodiment of the present invention in which an optical generating element (28) provided on the upper surface of the vessel (1) is connected to the electrodes (4), (6) and a secondary battery (9) through a controller (29).

Although the controller and the secondary battery are provided in the vessel shown in the drawing, these units may alternatively be disposed outside the vessel.

The function is as follows: Light energy is transformed into electrical energy in the optical generating element (28), and the electrical energy is stored in the secondary battery (9) as occasion demands. The voltage input to the controller (29) is adjusted to a value within the given range of 0 to 2.5 V by the controller (29) and is applied between the electrode (6) on the air side and the electrode (4) of the vessel side.

When the space (2) in which humidity is to be controlled is dehumidified, a current is controlled by the controller so as to pass through the diaphragm from the electrode (4) on the vessel side to the electrode (6) on the air side. Consequently, the moisture contained in the space (2) is decomposed by the electrode (4) on the vessel side in accordance with the following reaction:

$$H_2O \rightarrow 2H^+ + 1/2\ 0_2 + 2e^-$$

In this way, the space 1 is dehumidified, as described earlier.

When the space 1 is to be humidified, the direction of passage of that current is reversed. As a result, the reaction taking place in the electrode (6) on the air side and the reaction taking place in the electrode (4) on the vessel side progress in the reverse direction and the space 2 is humidified.

The speeds of dehumidification and humidification in the above-described operations are proportional to the current passing between the electrode (6) on the air side and the electrode (4) on the vessel side. Therefore, increases in the speeds of dehumidification and humidification can be achieved by connecting a plurality of optical generating elements (28) in series to increase the terminal voltage between the two electrodes. A plurality of optical generating elements may be connected in series, in parallel, or in combinations thereof, and the current is controlled by the controller (29) so that any current unnecessary for controlling humidity is passed to the secondary battery (9) and stored therein to be discharged for control of humidity as occasion demands.

The present invention can be suitably applied to the control of humidity in a vessel of a magnetic disk unit, as well the control of humidity in any closed vessel.

In this embodiment, moisture is removed and added by using an electrochemical cell, and the optical generating element which can utilize light rays (sun rays) existing outside is used as a source of energy. This embodiment thus has the effect that the humidity of a gas can be continuously controlled with high reliability, without the need for the maintenance cost.

A further embodiment, described below, is arranged such that the terminal voltage between the two electrodes is controlled.

A moisture controller related to this embodiment comprises a voltage detection means which detects the terminal voltage between the two electrodes of the humidity control element, and a voltage controller which controls the terminal voltage of the humidity control element to prevent it from rising above a given

value, corresponding to signals from the voltage detection means.

In this embodiment, when the humidity control element is charged with a direct current, water is decomposed in the electrode through which the current is being passed and water is produced in the electrode from which the current is passing so that the humidity of the gas containing moisture is controlled, and the voltage controller controls the terminal voltage between the two electrodes of the humidity control element which is detected by the voltage detection means so as to prevent it from rising above a given value so that no side reactions other than the above-described reactions are caused.

Fig. 9 is an explanatory view of this embodiment of the present invention. In the drawing, a humidity controller comprises a humidity control part (32) and voltage detection part (33) and is received in a vessel (not shown) in an atmosphere consisting of a gas containing moisture. A humidity control element (34) is disposed in the humidity control part (32), the humidity control element comprising a first electrode (4) which is disposed (on the vessel side) in contact with the gas containing the moisture in the vessel which receives the humidity controller, a hydrogen ion conductive solid (5) such as a thin film of a polymeric solid electrolyte provided adjacent to the first electrode, and a second electrode (6) which is provided (on the air side) adjacent to the hydrogen ion conductive solid and in contact with the air. An example of what may be used as the thin film of polymeric solid electrolyte of the hydrogen ion conductive solid is Nafion (trade name, produced by Du Pont Co., Ltd.) which is one form of ion-exchange membrane. A power source (9) is connected to the humidity control element through a voltage controller (35), and a direct current voltage is applied to the humidity control element by the power source.

A voltage detection element (36) is provided in the voltage detection part (33), the voltage detection element being connected to the first and second electrodes, of the humidity control element through lead wires (37). The voltage detection element detects the terminal voltage of the humidity control element, feeds the voltage detected back to the voltage controller through lead wires (38), and maintains the terminal voltage applied to the humidity control element at a given value.

The operation of the humidity control part of the humidity controller configured as described above is as follows: When a direct current voltage is applied to the humidity control element from the power source in a first direction, the moisture contained in the gas in the vessel is released to the air.

Conversely, when the moisture in the air is to be moved into the vessel, i.e., the vessel is to be humidified, as shown in Fig. 10, if the polarities of the power source (9) are reversed by a polarity changing switch (39) through a lead wire (40), the direction of passage of the current is reversed, and thus the reaction on the first electrode (4) (Formula 1) and the reaction on the second electrode (6) (Formula 2) are interchanged, whereby the gas in the vessel is humidified.

Fig. 11 shows the results obtained from the measurements of the relationship between the current density and the terminal voltage by using the voltage detection element (10). In the drawing, curves A, B and C represents the cases of humidities of 20%, 35% and 85%, respectively, and hydrogen is produced within the range above the line shown by the arrow. When humidity is low, the terminal voltage is generally higher than those in the cases with higher humidity, and the terminal voltage rapidly increases at a point near 1.5 V. As a result of various investigations conducted by the inventors with respect to these phenomena, it was found that the terminal voltage within a range of low humidity is higher than that within a range of high humidity because the resistance of the thin film of a polymeric solid electrolyte of the hydrogen ion conductive solid (5) decreases with the increase in the water content, and thus the level of the terminal voltage depends upon the degree of humidity. It was also found that the rising of the terminal voltage at a point near 1.5 V is caused by the production of a hydrogen-generating reaction as a side reaction. In other words, within a range of low current densities, the reactions described below take place.

Anodic reaction

(Dehumidifying reaction)

$H_2 0 \rightarrow 2H^+ + 1/2\ 0_2 + 2e^-$
$E^{\cdot}_A = 1.23$ V (relative to SHE)

Cathodic reaction

(Humidifying reaction)

$H_2 0 \leftarrow 2H^+ + 1/2\ 0_2 + 2e^-$
$E^{\cdot}_C = 1.23$ V (relative to SHE)

Total reaction

$$\underset{\text{(on the dehumidification side)}}{H_2O} \rightarrow \underset{\text{(on the humidification) side)}}{H_2O}$$

Theoretical decomposition voltage

$Ed = E^{\cdot}_A - E^{\cdot}_C = 0V$

Namely, the theoretical decomposition voltage is not involved in the main components of the terminal voltage which involves only an ohmic loss of the polymeric solid electrolyte and an overvoltage between the anode and cathode.

However, if the terminal voltage is increased within a range of low humidity or high currents, the reactions described below take place.

Anodic reaction

(Dehumidifying reaction)

$H_20 \rightarrow 2H^+ + 1/2\ 0_2 + 2e^-$
$E^{\cdot}_A = 1.23$ V (relative to SHE)

Cathodic reaction

(Humidifying reaction)

$H_2 \leftarrow 2H^+ + 2e^-$
$E^{\cdot}_C = 0$ V (relative to SHE)

Total reaction

$$\underset{\text{(on the de-humidification side)}}{H_2O} \rightarrow \underset{\text{(on the air side)}}{H_2} + \underset{\text{(on the vessel side)}}{1/2\ 0_2}$$

Theoretical decomposition voltage

$Ed = E^{\cdot}_A - E^{\cdot}_C = 1.23V$

A hydrogen-generating reaction takes place as a side reaction and it is thus considered that this reaction causes the rising of the terminal voltage.

This reaction can be neglected in a case in which the humidity controller performs only dehumidification, but it becomes a problem in a case in which the humidity controller performs dehumidification and humidification.

In the present humidity controller, therefore, the terminal voltage of the humidity control element is detected by the voltage detection element (36) and fed back to the voltage controller (35) which controls the voltage so as to prevent it from rising above a given value previously set, whereby the occurrence of the side reaction is prevented.

Fig. 12 shows the change with time of the terminal voltage of the humidity controller at a given value of direct current (5 mA). As shown by D in the drawing, the terminal voltage of the humidity controller increases with the passage of time. This is because, if the current is passed for a long time, the concentration of the hydrogen ions in the hydrogen ion conductive solid becomes high in the vicinity of the cathode (the electrode on the humidification side) and becomes low in the vicinity of the anode (the electrode on the dehumidification side). The polarity changing switch (39) is provided for removing such a non-uniform distribution in the concentrations of hydrogen ions. A direct current is passed through the humidity controller in the reverse direction for a short time, and the direction of passage of the current is returned to the initial direction so that the non-uniform distribution of the concentration of hydrogen ions is removed, resulting in the function of inhibiting the terminal voltage from increasing endlessly (shown by E in Fig. 12).

Fig. 13 is an explanatory view of a case in which a voltage detection element (42), (43) is separately provided in each of the first electrode (4) and the second electrode (6) so as to separately control the voltages of these electrodes. When it is desired to strictly control the total reaction which is the sum of the anodic reaction and the cathodic reaction, the voltage of each of the first electrode (4) and the second electrode (6) can be controlled by combination of voltage detection elements (42), (43) and the voltage controller (35). The first electrode (5) and the second electrode are divided by insulators (44), (45) respectively, and the voltage detection element (42) is connected between the divided first electrodes (4') and (4), and the voltage detection element (43) is connected between the divided second electrodes (6') and (6). The voltages from the voltage detection elements are fed back to the voltage controller (35) so that the voltage of each of the electrodes is kept at a given value.

Fig. 14 is a schematic diagram of a case in which the humidity controller (31) is applied to a magnetic disk unit. In the drawing, a magnetic disk unit (vessel) (15) contains a magnetic disk (16), a head (17) for writing information in the magnetic disk and reading information therefrom, and a drive (46) for driving the magnetic disk. The humidity controller is partially exposed in the magnetic disk unit, the other portion being partially exposed to the outside of the magnetic disk unit.

Fig. 15 is a graph showing the state of dehumidification at 25°C in the humidity controller which is applied to the magnetic disk unit shown in Fig. 14. In the drawing, the humidity of the atmosphere is 62% (shown by F in the drawing) and the initial humidity in the magnetic disk unit (19) is about 32%. A blank vessel (shown by G in the drawing) is the magnetic disk unit in which the humidity controller is not provided, and a vessel with the humidity controller (shown by H in the drawing) is the magnetic disk unit in which the humidity controller is provided. As seen from Fig. 15, a difference in the humidities is apparent after 400 hours have passed (shown by I in the drawing), this indicating that the humidity controller has the effect of controlling humidity.

Each of the above-described embodiments can be widely applied in other closed-type vessels. The above-described embodiments also concern the cases in which the voltage detection elements (36), (44), (45) are employed for controlling the reactions produced on the electrodes, but, when a dry battery having a certain life is used as the power source (9), these voltage detection elements can be used for detecting the life of the dry battery used.

Still another embodiment aims to provide a humidity controller which can continuously control the moisture, i.e., humidity, in a gas phase with high reliability and can indicate the state of control of humidity in a vessel. A humidity controller of this embodiment comprises a display which indicates the humidity in the space in correspondence with the quantity of electricity passing through the electrochemical element.

In this humidity controller, an electrical signal or optical signal is generated corresponding to the current passing through the electrochemical element, with the state of control of the humidity thereby being displayed to the outside.

In Fig. 16, a display (47) has a display portion (48) comprising a β-alumina substitution product (51) as a solid electrolyte, a counter electrode (52) in which one of the surfaces is in contact with the β-alumina substitution product (51) and the other surface is in contact with the space to be controlled, a coloring electrode (53) which is provided opposite to the counter electrode (52) through the β-alumina substitution product (51) and is made of a $WO_3$ thin film, and a clear conductive film (54) which covers the coloring electrode (53); and a controller (56) which supplies between the counter electrode (52) and the clear conductive film (54) of the display portion (48) a current corresponding to the current passing through the electrochemical element (1). Reference numeral (9) denotes a direct current source which supplies electrical energy required for the electrochemical element (55) and the display (47). The direct current source has a controller for controlling the output voltage to be usually 1 to 3 V and an inverter which inverts the polarities of the output voltage, but these units are not shown in the drawing for the sake of simplicity.

The moisture contained in the gas in the space to be controlled can be removed to the air, or moisture in the air can be reversely moved into the vessel, i.e., the vessel is humidified.

Part of the current passing through the electrochemical element (55) is set by the controller (56) to a current value corresponding to the speed of dehumidification or humidification.

The operation at humidification is as follows: A current passes through a solid electrolyte used for the display portion (48) which is, in this case, the -alumina substitution product (51) serving as the hydrogen ion conductive solid electrolyte, from the counter electrode (52) toward the coloring electrode (53) and the clear conductive film (54). The reaction described below takes place on the coloring electrode (53) which is colored to a blue color in proportion to the quantity of electricity.

$$\underset{\text{(colorless)}}{WO_3} + XH^+ + Xe^- \rightarrow \underset{\text{(blue)}}{HxWO_3} \quad (4)$$

The degree of dehumidification depends upon the degree of the blue color of the coloring electrode (53).

On the other hand, when the gas in the vessel is humidified, a current is passed in the reverse direction, and the reaction described below takes place on the coloring electrode (53).

$$\underset{\text{(blue)}}{HxWO_3} \rightarrow \underset{\text{(colorless)}}{WO_3} + XH^+ + Xe^- \quad (5)$$

The coloring electrode (53) is discolored in correspondence with the degree of humidification.

This humidity controller can be used in a fixed magnetic disk unit. With the surfaces of the first electrode (4) of the electrochemical cell and the counter electrode (52) of the display portion in contact with the space in the disk unit casing, and the second electrode (6) and the coloring electrode (53) in contact with the outside of the casing, so that the state of control of humidity in the casing can be observed by the degree of coloring (blue) of the coloring electrode (53) from the outside.

Although the above-described embodiment concerns the case using the $WO_3$ thin film as the coloring electrode (53) and the -alumina substitution product as the solid electrolyte (53), these elements are not limited to such substances. For example, if an $Li^+$ ion conductive solid electrolyte such as Li-$\beta$-alumina is used as the solid electrolyte (51), the same effect is obtained.

In addition, although the above-described embodiment concerns the case in which the display has the function of detecting the state of dehumidification or humidification as a change in light, the display is not limited to this. For example, an electrochemical integrator such as a silver ion electron-mixed conductor is used so as to be able to detect as an electrical signal the direction of the current passing through the humidity control element (55) the voltage value corresponding to the quantity of the current passing or the current value and to indicate it.

A further embodiment is described below.

A humidity controller related to this embodiment comprises a humidity sensor which controls the humidity in the gas atmosphere containing moisture to a given value. In this embodiment, when a direct current is passed through the humidity control element, the decomposition of water takes place on the electrode in which the current is passed, and the production of water takes place on the electrode from which the current is passed so that the humidity in the gas containing moisture is controlled, as well as the direction and strength of the current to be passed through the humidity control element being controlled in correspondence with the signals from the humidity sensor, whereby the humidity in the gas containing moisture is continuously controlled to be any given value.

Fig. 17 is an explanatory view of this embodiment. In the drawing, the humidity controller comprises a humidity control portion (62) and a humidity detection portion (63) and is received in a vessel (not shown) of a gas atmosphere containing moisture. A humidity control element (64) is provided in the humidity control portion and comprises a first electrode (4) disposed in the vessel receiving the humidity controller, a hydrogen ion conductive solid (5) such as a polymeric solid electrolyte, and a second electrode (6) disposed adjacent to the hydrogen ion conductive solid on the side of the air. A power source (9) is connected to the humidity control element through a voltage controller (65), and a direct current voltage is

applied to the humidity control element from the power source.

The humidity detection portion (63) receives a humidity sensor (66) which detects the humidity in the vessel and sends the detected electrical signal to the voltage controller. The voltage controller controls the direction and the strength of the current passed through the humidity control element in correspondence with the signals from the humidity sensor.

The humidity control portion of the humidity controller configured as described above operates as described below. When a direct current is applied to the humidity control element from the power source, the moisture contained in the gas in the vessel contacting the positive first electrode (4) is removed, or conversely the gas in the vessel is humidified.

The humidity of the gas in the vessel is detected by the humidity sensor (66) and converted into an electrical signal which is then transmitted to the voltage controller (65) through the lead wires. The voltage controller sets the polarities of the power source on the basis of the electrical signal transmitted thereto in such a manner that, when the humidity of the gas in the vessel is lower than the set value, the gas is humidified. Conversely, when the humidity in the vessel is higher than the set value, the polarities of the power source are so set that the gas in the vessel is dehumidified. In this way, the humidity controller can control the humidity of the gas in the vessel to a given value.

Fig. 18 is a graph showing the state of humidification and dehumidification at 25 °C by the humidity controller of Fig. 17 applied to a magnetic disk unit. The humidity in a blank vessel, i.e., the humidity in the magnetic disk unit in which the humidity controller is not provided (shown by K in the drawing) increases at a constant rate due to the permeating entrance of moisture through a packing caused by a difference in the humidity in the air (shown by M in the drawing) from that in the vessel. On the other hand, the humidity in the magnetic disk unit (shown by L in the drawing) provided with the humidity controller shows the same tendency as that of the humidity in the blank vessel when no current passes through the humidity control element (shown by P in the drawing). In addition, the humidity in the magnetic disk unit provided with the humidity controller can be controlled to be increased (shown by N) or decreased (shown by Q) on the basis of the given set value in the voltage controller (65), while the electrical signals from the humidity sensor (66) being fed back to the voltage controller.

Although the above-described embodiment uses a polymeric solid electrolyte as the hydrogen ion conductive solid (6), this polymeric solid electrolyte may be formed as a film. For example, Nafion (trade name, produced by Dupon Co., Ltd.) which is an ion exchange membrane can be used. In this case, it is possible to produce a humidity control element (4) having a small value of resistance during the removal of humidity and the resistance to mechanical vibrations.

## Claims

1. A dehumidifier for removing moisture from a gas comprising a first electrode (4) which is in contact with said gas containing moisture on one surface thereof and, when a positive voltage is applied thereto, produces protons from said moisture, a proton conductive solid (5) which is connected to the other surface of said first electrode and through which said protons pass, and a second electrode (6) which is in contact with said proton conductive solid on one surface thereof in a portion other than the connection portion between said proton conductive solid and said first electrode (4), and which is in contact with a space on the other surface thereof and, when a negative voltage is applied thereto, produces hydrogen or water from said protons which have passed through said proton conductive solid, said dehumidifier being characterized in that said proton conductive solid (5) is a proton conductive solid electrolyte and each of said first electrode (4) and said second electrode (6) is a proton electron-mixed conductive solid.

2. A dehumidifier according to Claim 1, wherein said proton conductive solid electrolyte consists of

   $H_3MO_{12}PO_{40}.29H_20$ or
   $H_3W_{12}PO_{40}.29H_20$.

3. A dehumidifier according to Claim 1, wherein said proton conductive solid electrolyte consists of a polymeric solid electrolyte.

4. A dehumidifier according to Claim 3, wherein said polymeric solid electrolyte is a fluororesin having $-SO_3H$ groups.

5. A dehumidifier according to Claim 1, wherein said proton electron-mixed conductive solid consists of Pd, $LaNi_5$ or $Ti_3Ni$.

6. A dehumidifier according to any of Claims 1 to 5, wherein each of said first and second electrodes is a porous electrode.

7. A dehumidifier according to any of Claims 1 to 6 further comprising a power source which applies a voltage between said first and second electrodes.

8. A dehumidifier according to Claim 7, wherein said power source consists of an optical generating element.

9. A dehumidifier according to Claim 8 further comprising a secondary battery in which the electrical energy obtained from said optical generating element is stored.

10. A dehumidifier according to Claim 8 further comprising a plurality of optical generating elements and a controller which enables said plurality of said optical generating elements to be used in series, in parallel or in combination thereof.

11. A dehumidifier according to Claim 1 further comprising a voltage detection means (36) which is connected to said first and second electrodes and detects the terminal voltage between said two electrodes and a voltage controller (35) which controls said terminal voltage so as to prevent it from becoming above a given value, corresponding to the signal from said voltage detection means.

12. A dehumidifier according to Claim 7 further comprising a humidity sensor (66) which is disposed in the atmosphere of said gas containing said moisture and detects the humidity in said atmosphere and a voltage controller which controls the polarities and strength of the voltage applied from said power source so that said humidity in said atmosphere is a given value, corresponding to the signal from said humidity sensor.

13. A dehumidifier according to Claim 1 further comprising a display (47) which indicates the humidity in said gas corresponding to the quantity of electricity passed through said dehumidifier.

14. A dehumidifier according to any of Claims 1 to 13 further comprising a vessel (1) having an opening which accommodates said dehumidifier therein, and said second electrode (6) faces outside of said vessel through said opening and said first electrode (4) faces inside of said vessel through said opening.

**Patentansprüche**

1. Entfeuchter, um Feuchtigkeit aus einem Gas zu entfernen, der folgendes aufweist: eine erste Elektrode (4), die an einer ihrer Oberflächen mit dem Feuchtigkeit enthaltenden Gas in Kontakt ist und die dann, wenn eine positive Spannung an sie angelegt wird, Protonen aus der Feuchtigkeit erzeugt; einen protonenleitfähigen Festkörper (5), der mit der anderen Oberfläche der ersten Elektrode verbunden ist und durch den die Protonen hindurchgehen; und eine zweite Elektrode (6), die an einer ihrer Oberflächen in einem anderen Bereich als dem Verbindungsbereich zwischen dem protonenleitfähigen Festkörper und der ersten Elektrode (4) mit dem protonenleitfähigen Festkörper in Kontakt ist und die an ihrer anderen Oberfläche mit einem Raum in Kontakt ist und die dann, wenn eine negative Spannung an sie angelegt wird, aus den Protonen, die durch den protonenleitfähigen Festkörper hindurchgegangen sind, Wasserstoff oder Wasser erzeugt, wobei der Entfeuchter dadurch gekennzeichnet ist, daß der protonenleitfähige Festkörper (5) ein protonenleitfähiger Festelektrolyt ist und daß sowohl die erste Elektrode (4) als auch die zweite Elektrode (6) Protonen/Elektronen-gemischtleitfähige Festkörper sind.

2. Entfeuchter nach Anspruch 1, wobei der protonenleitfähige Festelektrolyt aus

$H_3MO_{12}PO_{40} \cdot 29H_2O$ oder
$H_3W_{12}PO_{40} \cdot 29H_2O$

besteht.

3. Entfeuchter nach Anspruch 1, wobei der protonenleitfähige Festelektrolyt aus einem polymeren Festelektrolyten besteht.

4. Entfeuchter nach Anspruch 3, wobei der polymere Festelektrolyt ein Fluorharz ist, das $-SO_3H$-Gruppen aufweist.

5. Entfeuchter nach Anspruch 1, wobei der Protonen/Elektronen-gemischtleitfähige Festkörper aus Pd, $LaNi_5$ oder $Ti_3Ni$ besteht.

6. Entfeuchter nach einem der Ansprüche 1 bis 5, wobei sowohl die erste als auch die zweite Elektrode poröse Elektroden sind.

7. Entfeuchter nach einem der Ansprüche 1 bis 6, der ferner eine Stromquelle aufweist, die zwischen der ersten und der zweiten Elektrode eine Spannung anlegt.

8. Entfeuchter nach Anspruch 7, wobei die Stromquelle aus einem optischen Generatorelement besteht.

9. Entfeuchter nach Anspruch 8, der ferner eine Sekundärbatterie aufweist, in der die von dem optischen Generatorelement erhaltene elektrische Energie gespeichert wird.

10. Entfeuchter nach Anspruch 8, der ferner eine Vielzahl von optischen Generatorelementen und eine Steuereinrichtung aufweist, die es ermöglicht, daß die Vielzahl der optischen Generatorelemente in Reihenschaltung, Parallelschaltung oder als Kombination davon verwendet wird.

11. Entfeuchter nach Anspruch 1, der ferner eine Spannungsabtasteinrichtung (36) aufweist, die mit der ersten und der zweiten Elektrode verbunden ist und die Klemmenspannung zwischen den beiden Elektroden und einem Spannungsregler (35) mißt, der die Klemmenspannung regelt, um zu verhindern, daß sie einen gegebenen Wert überschreitet, der dem Signal von der Spannungsabtasteinrichtung entspricht.

12. Entfeuchter nach Anspruch 7, der ferner einen Feuchtigkeitssensor (66), der in der Atmosphäre des die Feuchtigkeit enthaltenden Gases angeordnet ist und die Feuchtigkeit in dieser Atmosphäre mißt, und einen Spannungsregler aufweist, der die Polaritäten und Stärke der Spannung regelt, die von der Stromquelle angelegt wird, so daß die Feuchtigkeit in dieser Atmosphäre ein gegebener Wert ist, der dem Signal von dem Feuchtigkeitssensor entspricht.

13. Entfeuchter nach Anspruch 1, der ferner eine Sichtanzeige (47) aufweist, die die Feuchtigkeit in dem Gas anzeigt, die der Elektrizitätsmenge entspricht, die durch den Entfeuchter geleitet wird.

14. Entfeuchter nach einem der Ansprüche 1 bis 13, der ferner einen Behälter (1) aufweist, der eine Öffnung hat, in der der Entfeuchter aufgenommen ist, und wobei die zweite Elektrode (6) durch diese Öffnung zur Außenseite des Behälters weist und die erste Elektrode (4) durch diese Öffnung zur Innenseite des Behälters weist.

**Revendications**

1. Déshumidificateur pour éliminer l'humidité d'un gaz, comprenant une première électrode (4) qui est en contact avec ledit gaz contenant de l'humidité, sur une surface et, lorsqu'une tension positive est appliquée, elle produit des protons à partir de ladite humidité, un solide conducteur de protons (5) qui est connecté à l'autre surface de ladite première électrode et par où passent lesdits protons, et une seconde électrode (6) qui est en contact avec ledit solide conducteur de protons sur une surface dans une portion autre que la portion de connexion entre ledit solide conducteur de protons et ladite première électrode (4), et qui est en contact avec un espace sur l'autre sur face et, lorsqu'une tension négative lui est appliquée,elle produit de l'hydrogène ou de l'eau à partir desdits protons qui ont traversé ledit solide conducteur de protons, ledit déshumidificateur étant caractérisé en ce que ledit

solide conducteur de protons (5) est un électrolyte solide conducteur de protons et chacune de ladite première électrode (4) et de ladite seconde électrode (6) est un solide conducteur mixte de protons et d'électrons.

2. Déshumidificateur selon la revendication 1, où ledit électrolyte solide conducteur de protons se compose de

$H_3MO_{12}PO_{40}.29H_2O$ ou

$H_3W_{12}PO_{40}.29H_2O$.

3. Déshumidificateur selon la revendication 1, où ledit électrolyte solide conducteur de protons se compose d'un électrolyte solide polymérique.

4. Déshumidificateur selon la revendication 3, où ledit électrolyte solide polymérique est une résine fluorée ayant des groupes $-SO_3^H$.

5. Déshumidificateur selon la revendication 1, où ledit solide conducteur mélangé de protons et d'électrons se compose de Pd, $LaNi_5$ ou $Ti_3Ni$.

6. Déshumidificateur selon l'une quelconque des revendications 1 à 5, où chacune desdites première et seconde électrodes est une électrode poreuse.

7. Déshumidificateur selon l'une quelconque des revendications 1 à 6, comprenant de plus une source de puissance qui applique une tension entre les première et seconde électrodes.

8. Déshumidificateur selon la revendication 7, où ladite source de puissance comprend un élément générateur optique.

9. Déshumidificateur selon la revendication 8, comprenant de plus une batterie secondaire dans laquelle est stockée l'énergie électrique obtenue dudit élément générateur optique.

10. Déshumidificateur selon la revendication 8, comprenant de plus un certain nombre d'éléments générateurs optiques et un contrôleur qui permet d'utiliser lesdits éléments générateurs optiques en série, en parallèle ou en combinaison.

11. Déshumidificateur selon la revendication 1, comprenant de plus un moyen de détection de tension (36) qui est connecté aux première et seconde électrodes et qui détecte la tension aux bornes entre lesdites deux électrodes et un contrôleur de tension (35) qui contrôle ladite tension aux bornes afin de l'empêcher de passer au-delà d'une valeur donnée, correspondant au signal dudit moyen de détection de tension.

12. Déshumidificateur selon la revendication 7, comprenant de plus un capteur d'humidité (66) qui est disposé dans l'atmosphère dudit gaz contenant ladite humidité et qui détecte l'humidité dans ladite atmosphère et un contrôleur de tension qui contrôle les polarités et la force de la tension appliquée par ladite source de puissance, de manière que ladite humidité dans ladite atmosphère soit une valeur donnée correspondant au signal dudit capteur d'humidité.

13. Déshumidificateur selon la revendication 1, comprenant de plus un affichage (47) qui indique l'humidité dans ledit gaz, correspondant à la quantité d'électricité ayant traversé ledit déshumidificateur.

14. Déshumidificateur selon l'une quelconque des revendications 1 à 13, comprenant de plus un récipient (1) ayant une ouverture qui reçoit ledit déshumidificateur et ladite seconde électrode (6) est tournée vers l'extérieur dudit récipient par ladite ouverture et ladite première électrode (4) est tournée vers l'intérieur dudit récipient par ladite ouverture.

FIG. 1

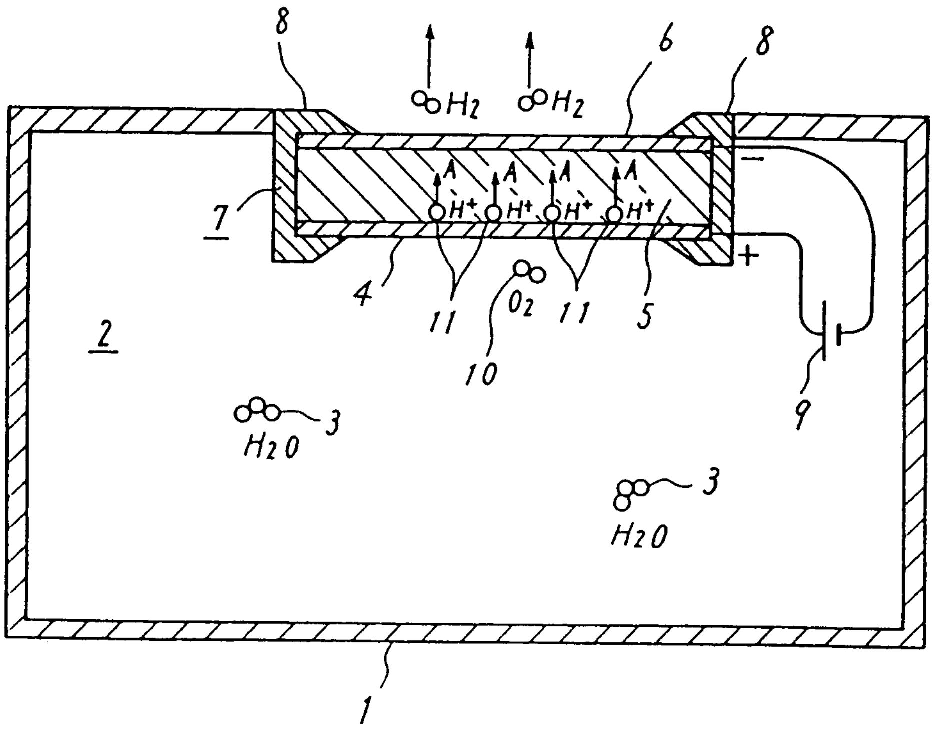

FIG. 2

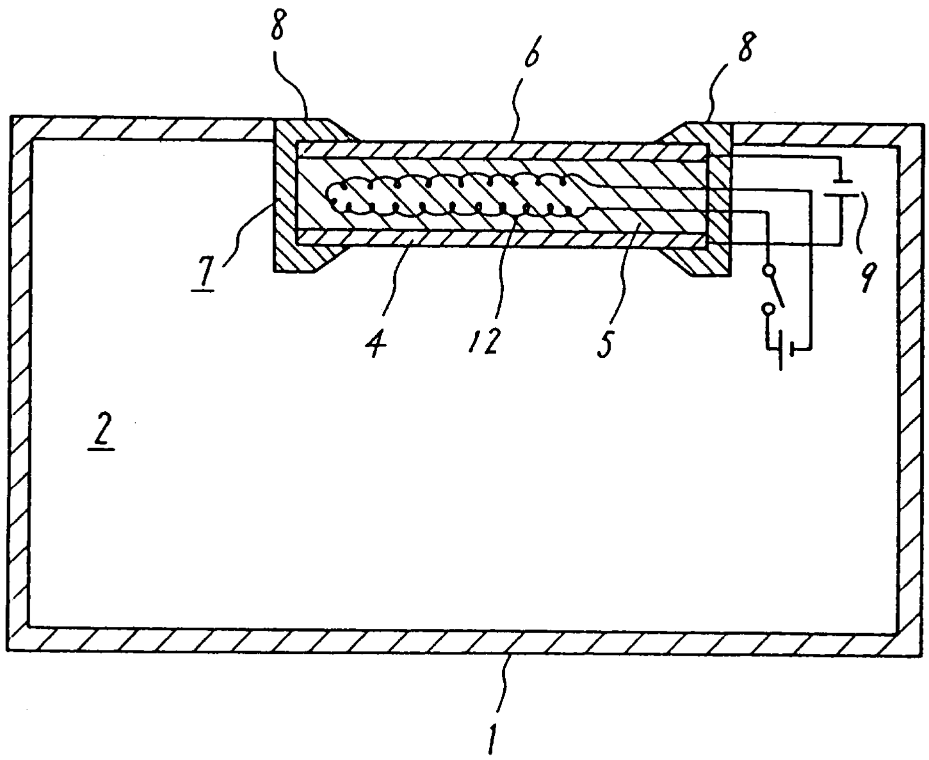

FIG. 3(a)

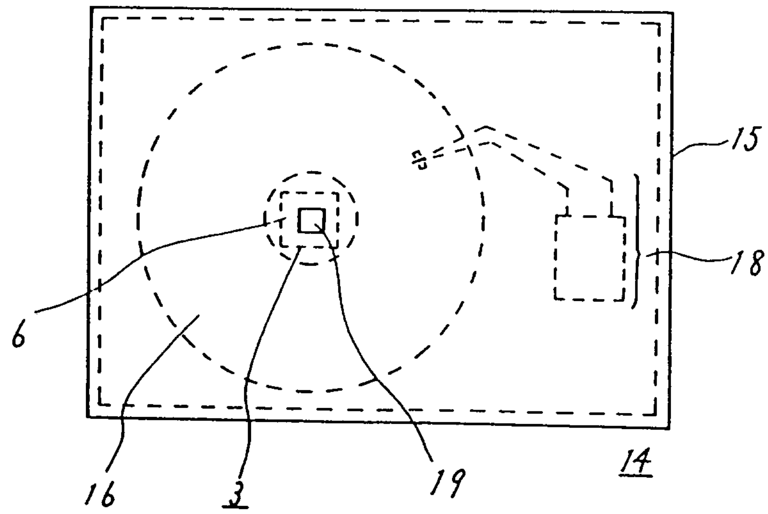


FIG. 3(b)

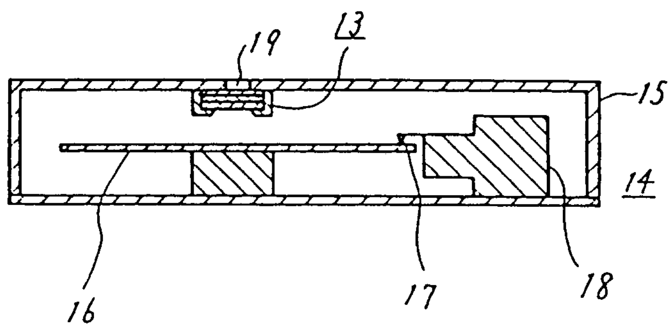

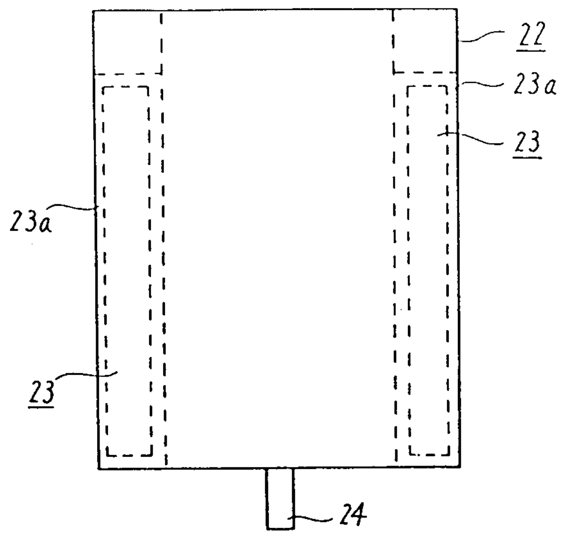


FIG. 4(a)

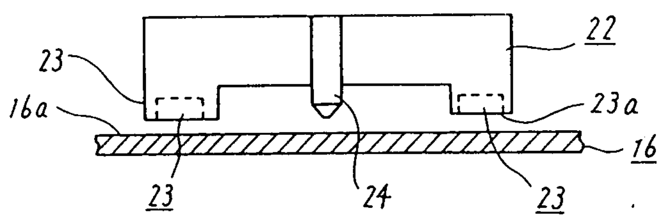


FIG. 4(b)

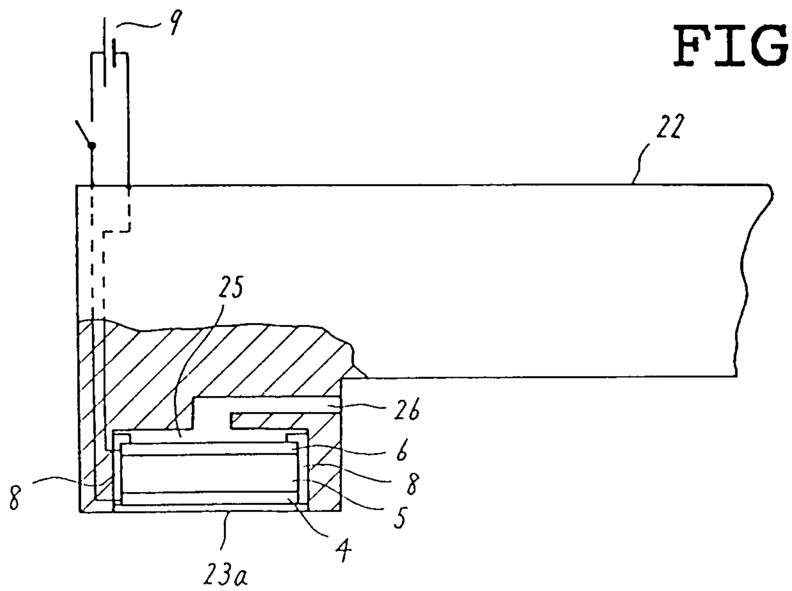


FIG. 4(c)

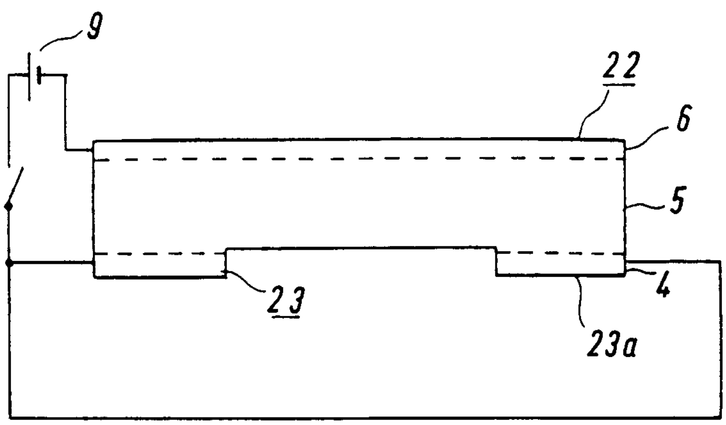


FIG. 5

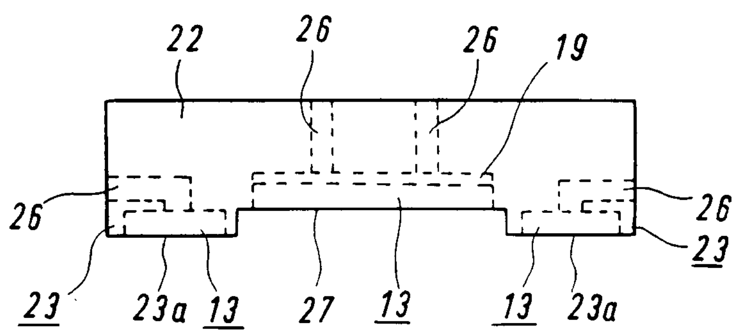


FIG. 6

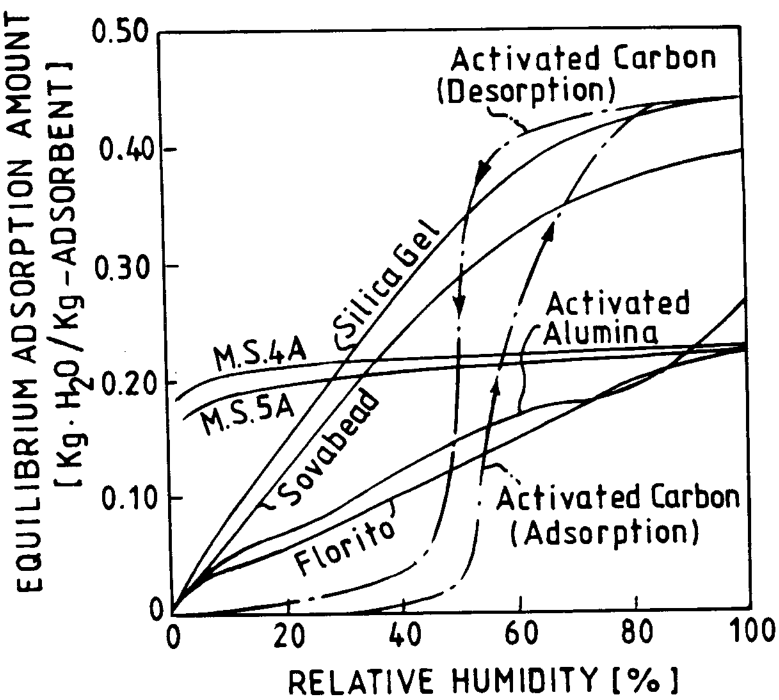


FIG.7

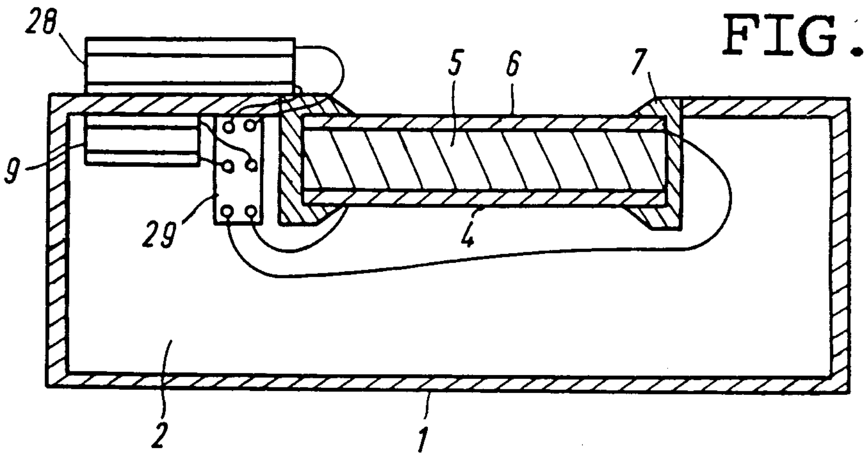


FIG. 8

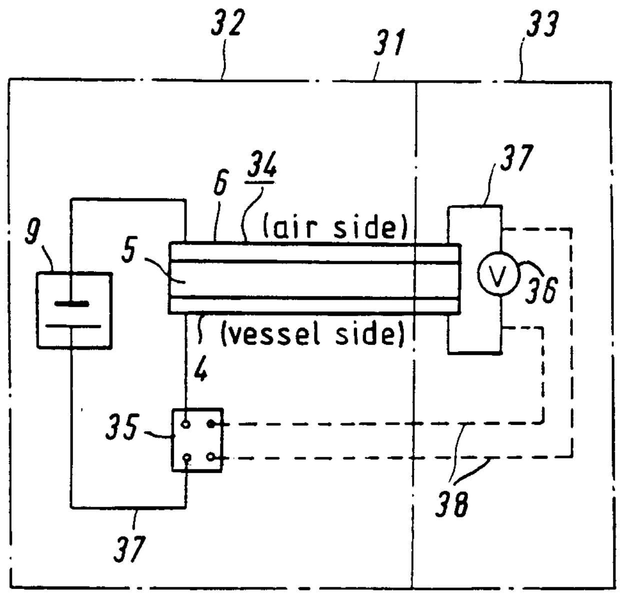


FIG. 9

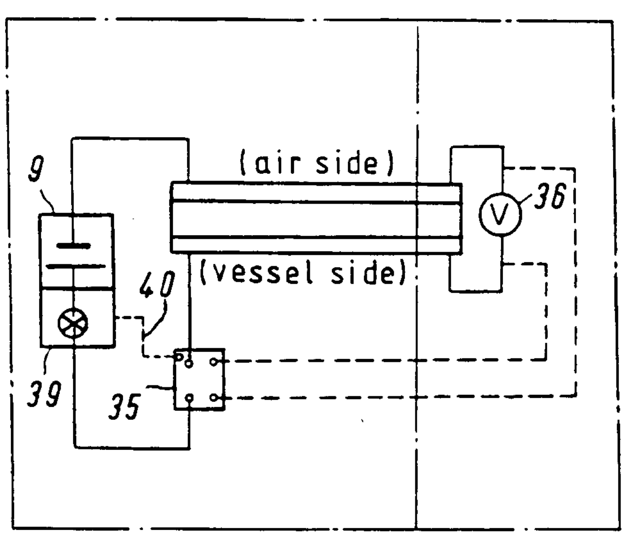


FIG.10

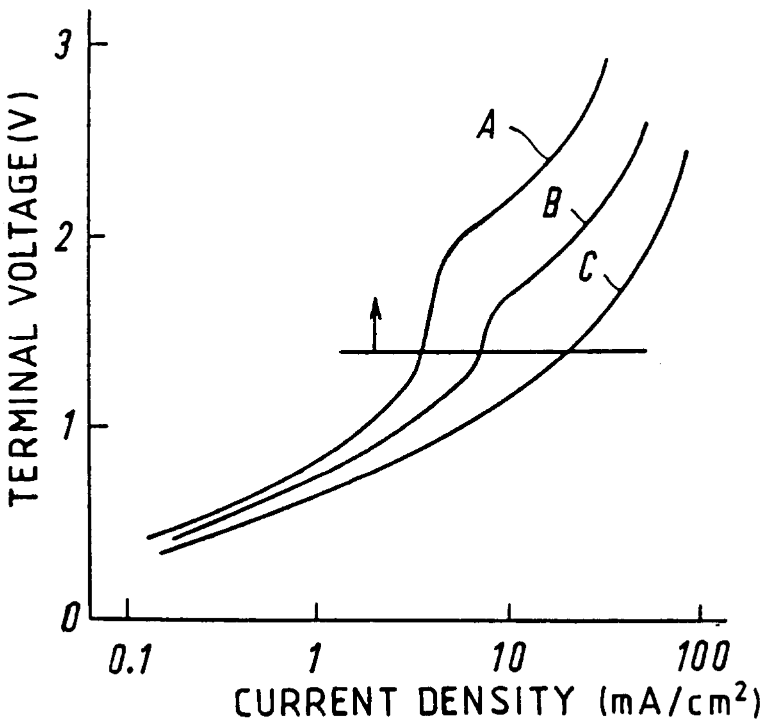
TERMINAL VOLTAGE (V)
3
2
1
0
A
B
C
0.1
1
10
100
CURRENT DENSITY (mA/cm²)

FIG. 11

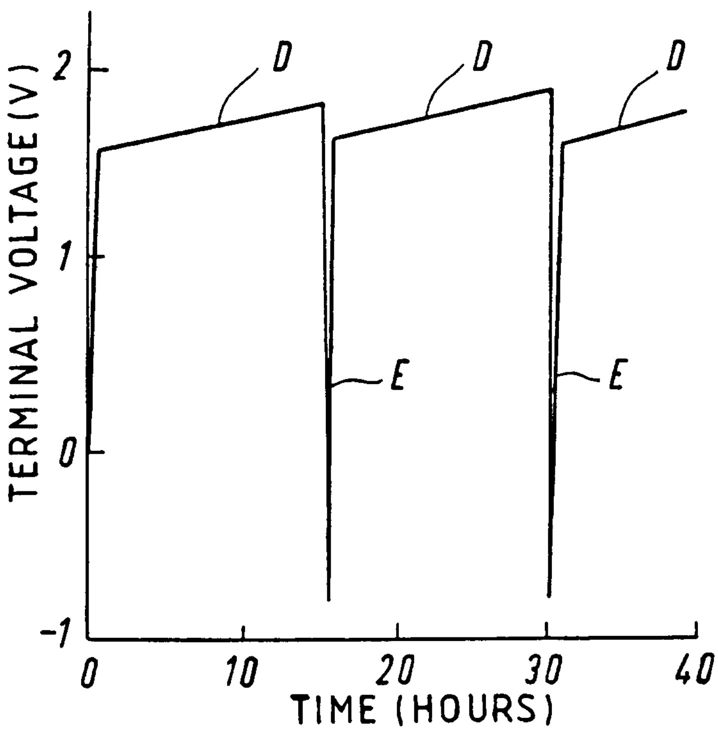
TERMINAL VOLTAGE (V)
2
1
0
-1
D
D
D
E
E
0
10
20
30
40
TIME (HOURS)

FIG. 12

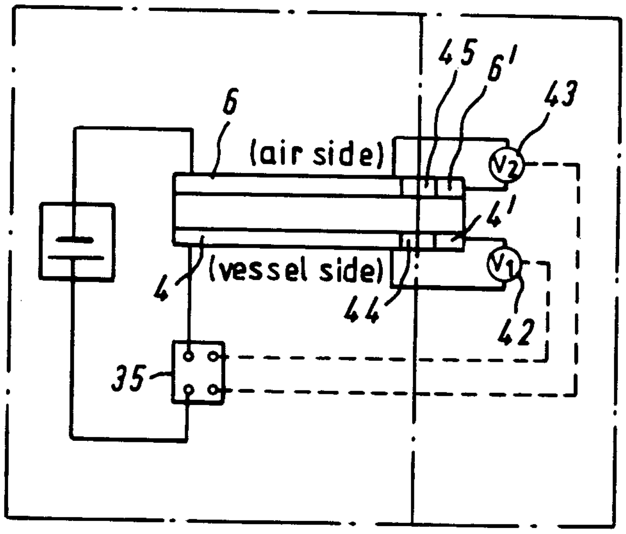


FIG. 13

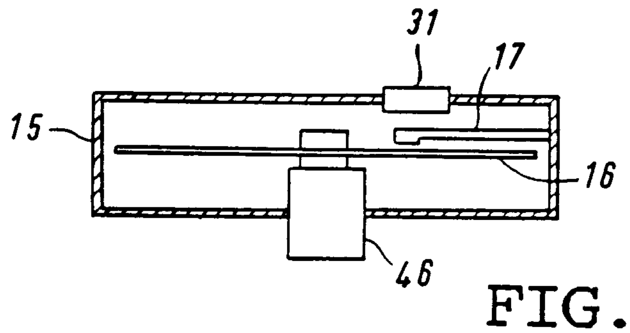


FIG. 14

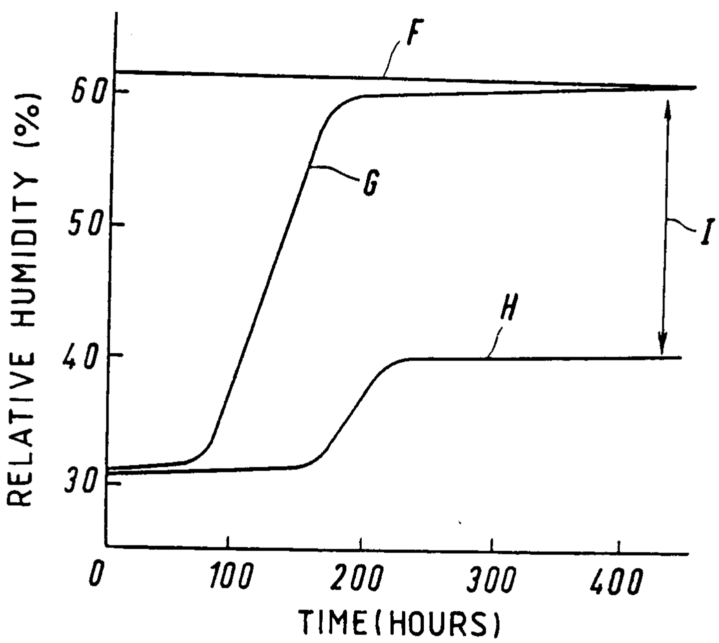


FIG. 15

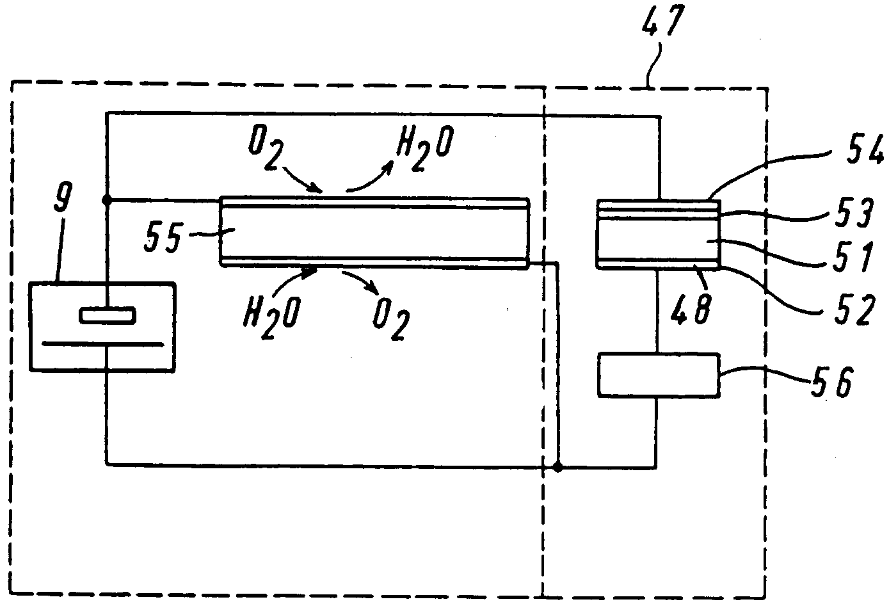
47
54
53
51
52
48
56
9
55
$O_2$
$H_2O$
$H_2O$
$O_2$

FIG. 16

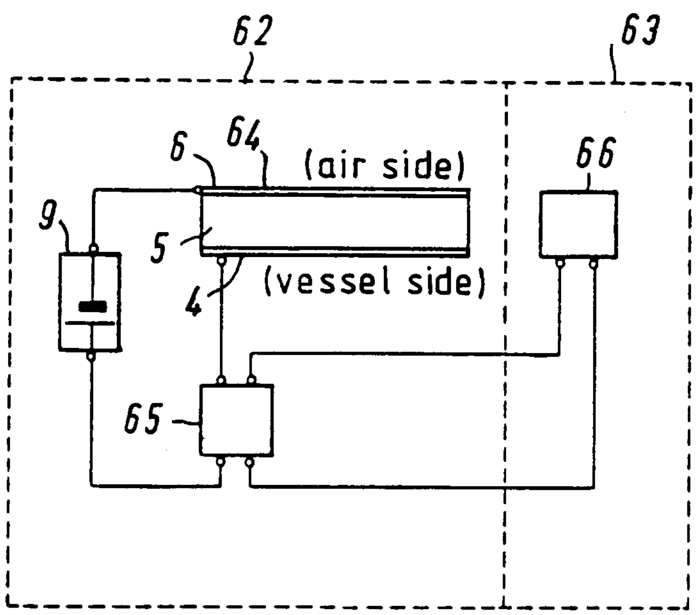
62
63
6
64
(air side)
66
9
5
4
(vessel side)
65

FIG. 17

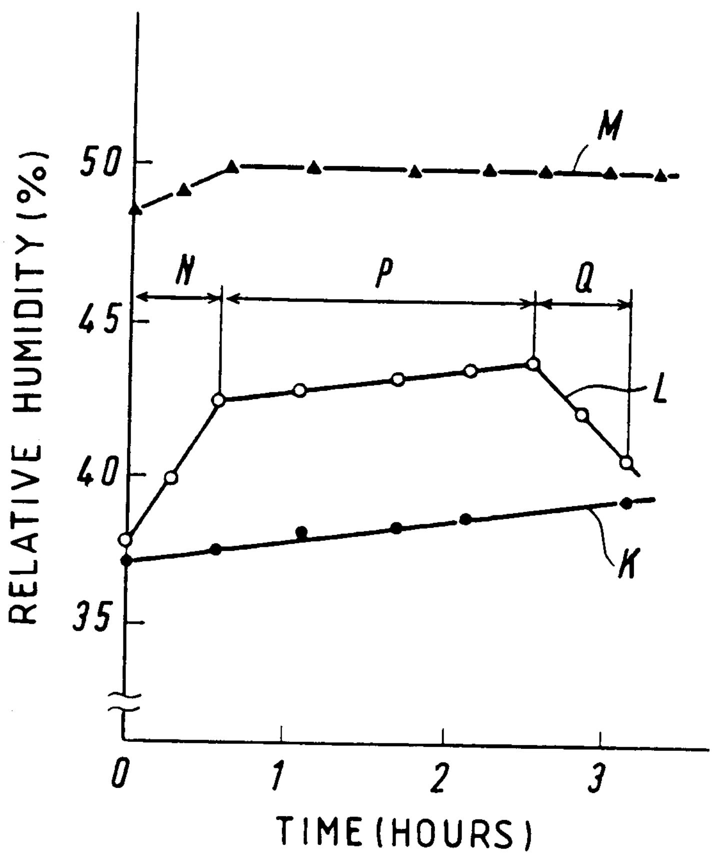


FIG. 18